# EUROPÄISCHE PATENTSCHRIFT

(11) **EP 1 323 313 B1**
(45) Veröffentlichungstag und Bekanntmachung des Hinweises auf die Patenterteilung: **30.06.2004**
(21) Anmeldenummer: 01986387.7
(22) Anmeldetag: 05.10.2001
(51) Int. Cl.: H04N 7/24

(54) **VERFAHREN UND ANORDNUNG ZUM ÜBERTRAGEN EINES VEKTORS**
METHOD AND ASSEMBLY USED FOR VECTOR TRANSFER
PROCEDE ET DISPOSITIF POUR TRANSMETTRE UN VECTEUR

(30) Priorität: 06.10.2000 DE 10049571
(43) Veröffentlichungstag der Anmeldung: 02.07.2003
(73) Patentinhaber: SIEMENS AKTIENGESELLSCHAFT, 80333 München (DE)
(72) Erfinder: HEUER, Jörg, 81539 München (DE); KAUP, Andre, 91090 Effeltrich (DE)
(86) Internationale Anmeldenummer: PCT/DE2001/003830
(87) Internationale Veröffentlichungsnummer: WO 2002/030123

(56) Entgegenhaltungen:
- EP-A- 1 176 556
- JENS-RAINER OHM, BELA MAKAI: "Results of CE CT5 on scalable representation of color histograms" ISO/IEC JTC1/SC29/WG11 (CODING OF MOVING PICTURES AND ASSOCIATED AUDIO), MPEG00/M6031, Mai 2000 (2000-05), XP002195390 Geneva in der Anmeldung erwähnt
- KAI-CHIEH LIANG ET AL: "Progressive indexing, retrieval and transmission of wavelet compressed image database" WAVELET APPLICATIONS IN SIGNAL AND IMAGE PROCESSING V, SAN DIEGO, CA, USA, 30 JULY-1 AUG. 1997, Bd. 3169, Seiten 190-199, XP002195391 Proceedings of the SPIE - The International Society for Optical Engineering, 1997, SPIE-Int. Soc. Opt. Eng, USA ISSN: 0277-786X
- DISTASI R ET AL: "Using fractal encoding for image indexing" IMAGE ANALYSIS AND PROCESSING, 1999. PROCEEDINGS. INTERNATIONAL CONFERENCE ON VENICE, ITALY 27-29 SEPT. 1999, LOS ALAMITOS, CA, USA,IEEE COMPUT. SOC, US, 27. September 1999 (1999-09-27), Seiten 975-980, XP010354185 ISBN: 0-7695-0040-4
- BERENS J ET AL: "Image indexing using compressed colour histograms" IEE PROCEEDINGS: VISION, IMAGE AND SIGNAL PROCESSING, INSTITUTION OF ELECTRICAL ENGINEERS, GB, Bd. 147, Nr. 4, 25. August 2000 (2000-08-25), Seiten 349-355, XP006014595 ISSN: 1350-245X

## Beschreibung

Die Erfindung betrifft ein Verfahren und eine Anordnung zum Übertragen eines Vektors.

Ein solches Verfahren ist aus [1] oder [2] bekannt und wird dort bei einer Bearbeitung von Multimedia Information verwendet.

In den vergangenen Jahren wurden verschiedene Standards zur Codierung von Multimedia Information, beispielsweise eine Videoinformation oder eine Audioinformation, festgeschrieben.

Ein solcher Standard ist beispielsweise ein Bildcodierungsstandard MPEG4 [3].

Diese gemeinsamen Standards haben dazu geführt, dass immer mehr Multimedia Information verfügbar ist. Um diese Information einem Nutzer verfügbar zu machen, ist es notwendig diese Multimedia Information zu indexieren.

Eine solche Indizierung erfolgt üblicherweise durch sogenannte Deskriptoren, welche Merkmale der Multimedia Informationen beschreiben. Solche Merkmale sind beispielsweise eine Farbverteilung oder eine Helligkeitsverteilung, welche ein digitalisiertes Bild aufweist.

Diese Deskriptoren sind häufig Histogramm basiert, d.h. eine Häufigkeit eines Wertes eines zu beschreibenden Merkmals wird ermittelt.

Aus [1] oder [2] ist ein solches Histogramm im Rahmen einer Beschreibung einer Farbverteilung eines digitalisierten Bildes bekannt. Mit diesem Histogramm, einem Farbhistogramm, wird eine Häufigkeit beschrieben, mit welcher ein bestimmter Farbwert oder ein bestimmter Farbbereich als Bildelement in einem Bild auftritt.

Da solche Histogramme in der Regel sehr viele Einträge haben, ist ein Vergleich von solchen Histogrammen aufwendig. Zudem haben benachbarte Einträge oftmals ähnliche Werte.

Aus [1] oder [2] ist es bekannt, in diesem Fall ein Histogramm unter Verwendung einer Haar-Wavelet-Transformation zu transformieren.

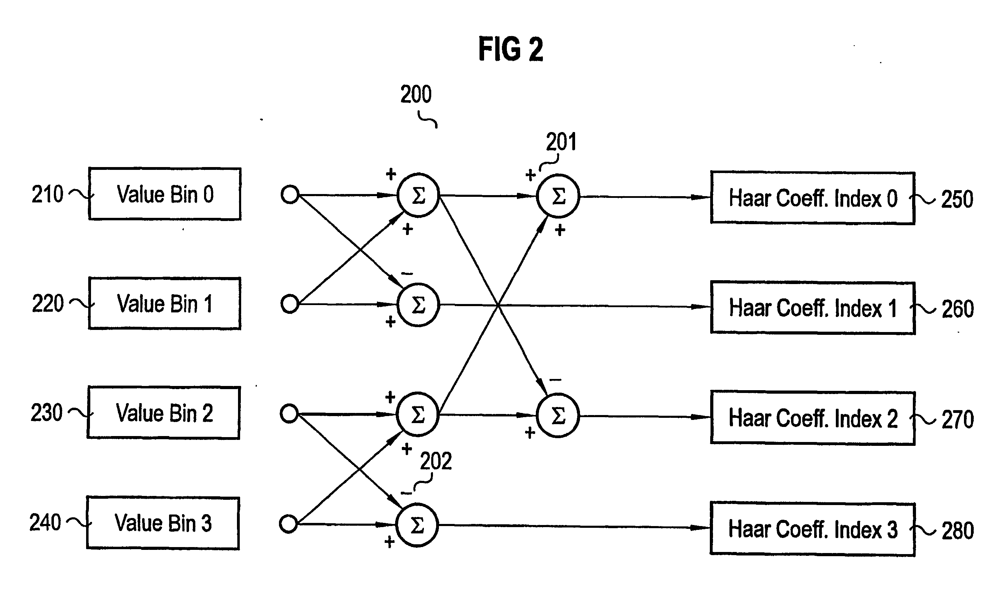

Fig. 2 zeigt schematische eine Anwendung einer Haar-Wavelet-Tranformation (200), wie sie aus [1] oder [2] bekannt ist, auf ein eindimensionales 4-Bin-Histogramm, d.h. ein Histogramm mit vier Häufigkeitseinträgen.

Durch diese Transformation (200), welche eine Kombination von vorgegebenen Rechenoperationen, nämlich einer Addition (201) und einer Subtraktion (202), ist, werden gemäß Fig. 2 vier Einträge des 4-Bin-Histogramms, ein Value Bin 0 (210) , ein Value Bin 1 (220) , ein Value Bin 2 (230) , ein Value Bin 3 (240), abgebildet auf vier Haar-Wavelet-Koeffizienten, einem Haar Coeff Index 0 (250), einem Haar Coeff Index 1 (260), einem Haar Coeff Index 2 (270), einem Haar Coeff Index 3 (280).

Diese Haar-Wavelet-Koeffizienten werden, wie es ebenfalls aus [1] oder [2] bekannt ist, anschließend quantisiert, binarisiert, d.h. jeder quantisierte Haar-Wavelet-Koeffizient wird in eine entsprechende binäre Zahl bzw. Ziffernfolge aus binären Ziffern 0 und 1 jeweils mit einer festen, vorgebbaren Bitlänge, umgewandelt, und nachfolgend zu einem Bit-Datenstrom codiert. Dieser Bit-Datenstrom wird zu einem Empfänger übertragen. Dort wird dieser mit einem Vergleichs-Bit-Datenstrom, welcher auf entsprechende Weise codiert wurde und welcher ebenfalls ein Histogramm beschreibt, verglichen.

Durch diese Vorgehensweise ist es möglich zwei Histogramme unter Verwendung ihrer zugehörigen Bit-Datenströme zu vergleichen, ohne die Bit-Datenströme wieder in die zugehörigen Histogramme rücktransformieren zu müssen.

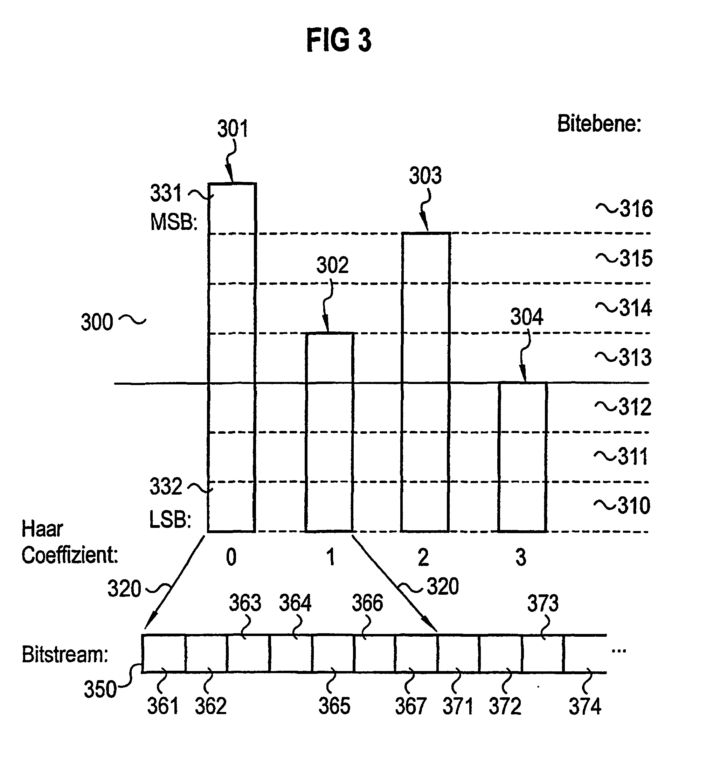

In Fig. 3 ist eine Vorgehensweise bei dieser Codierung gemäß [1] oder [2] schematisch dargestellt.

Fig. 3 zeigt eine Bitebenendärstellung (300) von vier binarisierten, quantisierten Haar-Wavelet-Koeffizienten (301 bis 304), welche gemäß Fig. 3 sieben Bitebenen (310 bis 316) aufweist.

Bei der Codierung (320), welche auch aus [4] bekannt ist, werden die vier Haar-Wavelet-Koeffizienten (301 bis 304) hintereinander, jeweils entsprechend einer abnehmenden Bitebenenwertigkeit der zugehörigen binären Ziffern in dem Bit-Datenstrom (350) abgelegt.

Dies geschieht derart, dass bei der Codierung (320) der Haar-Wavelet-Koeffizienten (301 bis 304) jeweils zuerst die binäre Ziffer der zugehörigen, höchstwertigen Bitebene, ein sogenannte Most Significant Bit (MSB) (331), in den Bit-Datenstrom (350) abgelegt wird. Als letztes zu codierende Bit des jeweiligen zu codierenden Haar-Wavelet-Koeffizienten (301 bis 304) wird die binäre Ziffer der niedrigstwertigen Bitebene (0-Bitebene (310)), ein sogenanntes Least Significant Bit (LSB) 332, in den Bit-Datenstrom (350) abgelegt.

Dies führt dazu, dass in dem Bit-Datenstrom (350) die binären Ziffern eines codierten Haar-Wavelet-Koeffizienten (361 bis 367) getrennt von denjenigen des nachfolgenden codierten Haar-Wavelet-Koeffizienten (371 bis 374) abgelegt werden.

Ferner ist aus [1] oder [2] bekannt, einen solchen Bit-Datenstrom zu einem Empfänger zu übertragen und ihn dort mit einem weiteren, gleichermaßen codierten Bit-Datenstrom, welcher ein zu vergleichendes Histogramm repräsentiert, zu vergleichen.

Diese bekannte Vorgehensweise weist aber den Nachteil auf, dass in dem Bit-Datenstrom codierte Information derart übertragen wird, dass für einen groben Vergleich von zwei Histogrammen unnötige Information in dem Bit-Datenstrom mitübertragen werden muss. Dies führt dazu, dass eine genutzte Übertragungsbandbreite bei einem solchen Vergleich nicht reduziert werden kann.

Somit liegt der Erfindung das Problem zugrunde, ein Verfahren sowie eine Anordnung anzugeben, mit welchem Verfahren und welcher Anordnung eine gegenüber dem bekannten Verfahren verbesserte und effizientere Übertragung von codierter Information, welche eine Häufigkeit beschreibt, möglich ist.

Das Problem wird durch das Verfahren sowie durch die Anordnung mit den Merkmalen gemäß dem jeweiligen unabhängigen Patentanspruch gelöst.

Bei dem Verfahren zur Übertragung eines Vektors mit mindestens zwei Vektorkomponenten, deren jede eine Häufigkeit beschreibt, wird jede Vektorkomponente als Bit-Zahl mit einer vorgegebenen Anzahl von Bitebenen dargestellt. Anschließend werden die Bit-Zahlen vorrangig entsprechend einer Wertigkeit der Bitebenen codiert und übertragen.

Die Anordnung zur Übertragung eines Vektors mit mindestens zwei Vektorkomponenten, deren jede eine Häufigkeit beschreibt, weist einen Prozessor auf, der derart eingerichtet ist, dass folgende Schritte durchführbar sind:
- jede Vektorkomponente wird als Bit-Zahl mit einer vorgegebenen Anzahl von Bitebenen dargestellt und
- die Bit-Zahlen werden vorrangig entsprechend einer Wertigkeit der Bitebenen codiert und übertragen.

Ein besonderer Vorteil der Erfindung liegt in der Speicherstruktur der binären Ziffern in dem Bitdatenstrom. Die binären Ziffern werden derart in dem Bitdatenstrom abgelegt, dass bereits die ersten binären Ziffern in dem Bitdatenstrom für einen groben Vergleich von zwei Histogrammen genutzt werden können. Dadurch kann ein solcher Vergleich schneller und effektiver durchgeführt werden. Zudem kann die genutzte Bandbreite bei der Übertragung des Bitdatenstroms reduziert werden.

Des weiteren ermöglicht die Erfindung eine schnelle Skalierung einer Vektorrepräsentation. Die Speicherstruktur der binären Ziffern ermöglicht, aus einer präzisen Vektorrepräsentation durch Elimination der letzten binären Ziffern, d. h. von binären Ziffern niederwertiger Bitebenen, eine grobe Vektorrepräsentation ohne ein Umsortieren von binären Ziffern zu erzeugen. Da dieses eine häufige Operation bei einer Übertragung und bei einem Vergleich von Histogrammen ist, ist dieser Vorteil von großer Bedeutung.

Darüber hinaus ermöglich die Erfindung einen schnellen Vergleich von Vektoren. Die binären Ziffern der wichtigen Komponenten eines Vektors sind am Anfang jeder Bitebene codiert und können direkt ausgelesen werden.

Die Anordnung ist insbesondere geeignet zur Durchführung der erfindungsgemäßen Verfahren oder einer deren nachfolgend erläuterten Weiterbildungen.

Bevorzugte Weiterbildungen der Erfindung ergeben sich aus den abhängigen Ansprüchen.

Die im weiteren beschriebenen Weiterbildungen beziehen sich sowohl auf die Verfahren als auch auf die Anordnung.

Die Erfindung und die im weiteren beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer im weiteren beschriebenen Weiterbildung möglich durch ein computerlesbares Speichermedium, auf welchem ein Computerprogramm gespeichert ist, welches die Erfindung oder Weiterbildung ausführt.

Auch kann die Erfindung oder jede im weiteren beschriebene Weiterbildung durch ein Computerprogrammerzeugnis realisiert sein, welches ein Speichermedium aufweist, auf welchem ein Computerprogramm gespeichert ist, welches die Erfindung oder Weiterbildung ausführt.

In einer Ausgestaltung ist der Vektor ein Koeffizientenvektor mit Koeffizienten, welche unter Verwendung einer Transformation, beispielsweise einer Haar-Wavelet-Transformation, ermittelt wurden.

Vor der Binarisierung der Vektorkomponenten kann der Vektor auch quantisiert werden.

In einer Weiterbildung repräsentiert der Vektor ein Histogramm. Ein solches Histogramm umfasst im allgemeinen Histogrammeinträge, die jeweils eine Häufigkeit beschreiben.

Vorzugsweise wird das Histogramm einer Haar-Transformation unterzogen, da damit Daten ohne Informationsverslust reduziert werden können. Eine weitere Reduktion von Daten erhält man, wenn das transformierte Histogramm quantisiert wird.

Bei einer Weiterbildung des Verfahrens, welches bei einer Codierung eines digitalisierten Bildes angewendet wird, beschreibt das Histogramm eine Frequenzverteilung, beispielsweise eine Farb- oder Helligkeitsverteilung, welche dem digitalisierten Bild zugrunde liegt.

Vorzugsweise werden die Vektorkomponenten entsprechend einer vorgegebenen Reihenfolge sortiert. Dadurch kann eine Auswahl aus zu codierende bzw. zu übertragenden Daten getroffen und damit eine Codiereffizienz bzw. Übertragungseffizienz erhöht werden.

Eine weitere Verbesserung der Codiereffizienz wird dadurch erreicht, dass nur eine vorgegebene Anzahl von Bitebenen codiert werden. Dabei ist es günstig, höherwertige Bitebenen zu codieren. In solchen Bitebenen ist wichtigere Codierinformation gespeichert als in niederwertigen Bitebenen.

Eine weitere Verbesserung der Codiereffizienz erhält man, wenn die Bit-Zahlen mit einer abnehmenden Wertigkeit der Bitebenen codiert werden.

In Figuren ist ein Ausführungsbeispiel der Erfindung dargestellt, welches im weiteren näher erläutert wird.

Es zeigen
- Figur 1: eine Skizze, welche Verfahrensschritte bei einer Codierung und Übertragung von Information gemäß einem Ausführungsbeispiel beschreibt;
- Figur 2: eine Skizze, welche schematisch eine Haar-WaveletTransformation beschreibt;
- Figur 3: eine Skizze, welche eine Codierung von Haar-WaveletKoeffizienten gemäß dem Stand der Technik beschreibt;
- Figur 4: eine Skizze, welche schematisch eine Haar-WaveletTransformation gemäß einem Ausführungsbeispiel beschreibt;
- Figur 5: eine Skizze, welche ein Codierung von Haar-WaveletKoeffizienten gemäß einem Ausführungsbeispiel beschreibt;
- Figur 6: eine Skizze, welche eine Codierung gemäß einer ersten Alternative zu einem Ausführungsbeispiel beschreibt, bei dem eine Reihenfolge der binären Zahle verändert wird;
- Figur 7: eine Skizze, welche eine Codierung gemäß einer zweiten Alternative zu einem Ausführungsbeispiel beschreibt, bei dem nur ausgewählte Bitebenen codiert werden.

### Ausführungsbeispiel: Codierung und Übertragung eines Farbhistogramms

Das im folgenden beschrieben Ausführungsbeispiel betrifft eine Codierung und Übertragung eines Farbhistogramms.

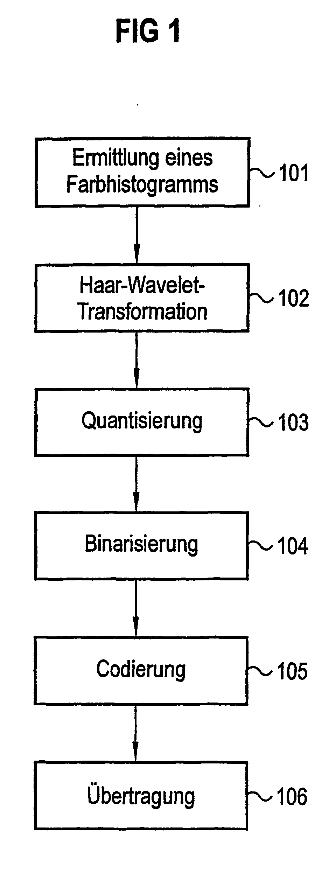

In Fig.1 sind schematisch Verfahrenschritte, welche bei der Codierung und der Übertragung des Farbhistogramms durchgeführt werden, dargestellt.

Im folgenden wird ein kurzer Abriss der Verfahrensschritte gegeben, welche nachfolgend erläutert werden:

In einem ersten Verfahrensschritt 101 wird das Farbhistogramm ermittelt. In einem zweiten Verfahrensschritt 102 wird auf das Farbhistogramm eine Haar-Wavelet-Transformation angewendet. Anschließend wird in einem dritten Verfahrensschritt 103 das Haar-transformierte Histogramm quantisiert. In einem vierten Verfahrensschritt 104 werden Werte des Haartransformierten und quantisierten Histogramms binarisiert, derart dass jeder binäre Werte eine vorgegebene Anzahl von Bitebenen aufweist. Nachfolgend in einem fünften Verfahrensschritt 105 werden die binären Werte vorrangig entsprechend einer Wertigkeit der Bitebenen in einen Bit-Datenstrom codiert. In einem sechsten Verfahrensschritt 106 wird der Bit-Datenstrom übertragen.

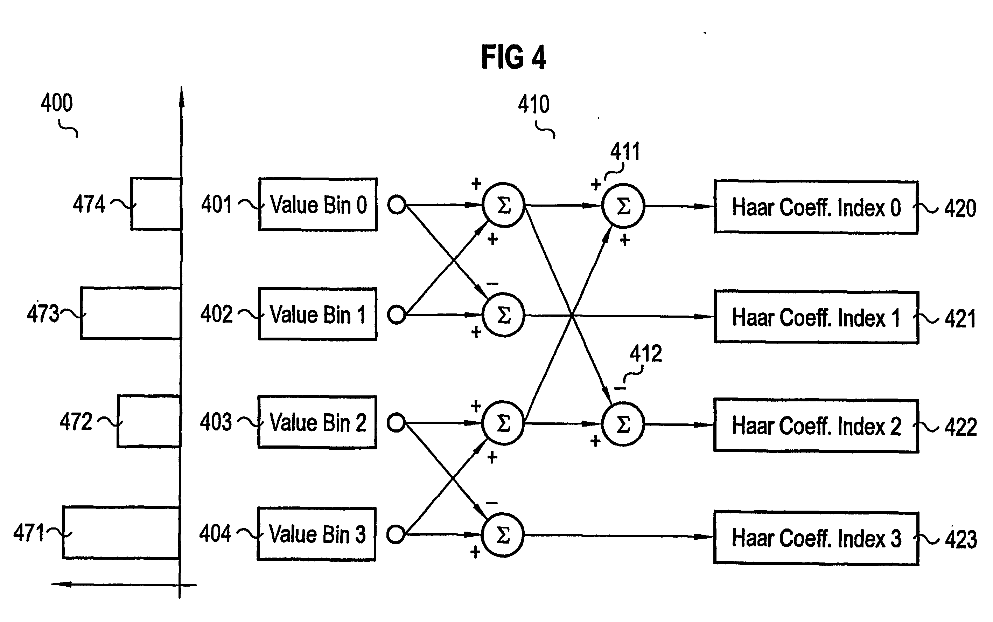

In Fig. 4 ist das Farbhistogramm, ein eindimensionales 4-Bin Histogramm 401 mit vier Histogrammeinträgen 401 bis 404, dargestellt, welches eine Farbverteilung eines digitalisierten Farbbildes beschreibt.

Mit diesem Farbhistogramm 400 wird eine Häufigkeit beschrieben, mit welcher ein bestimmter Farbbereich als Bildelement in dem digitalisierten Farbbild auftritt.

Dabei entspricht die Häufigkeit eines bestimmten Farbbereichs dem zugehörigen Eintrag 471, 472, 473 oder 474 in dem Farbhistogramm 400.

Ferner zeigt Fig. 4 schematische eine Anwendung einer Haar-Wavelet-Tranformation 410, wie sie in [1] oder [2] beschrieben ist, auf das Farbhistogramm 400.

Durch diese Haar-Wavelet-Transformation 410, welche eine Kombination von vorgegebenen Rechenoperationen, nämlich einer Addition 411 und einer Subtraktion 412, ist, werden die vier Einträge des Farbhistogramms, ein Value Bin 0 401 , ein Value Bin 1 402 , ein Value Bin 2 403 , ein Value Bin 3 404, abgebildet auf vier Haar-Wavelet-Koeffizienten, einem Haar Coeff Index 0 420, einem Haar Coeff Index 1 421, einem Haar Coeff Index 2 422, einem Haar Coeff Index 3 423.

Diese Haar-Wavelet-Koeffizienten 420 bis 423 werden, wie es ebenfalls in [1] oder [2] beschrieben ist, quantisiert und anschließend binarisiert, d.h. jeder quantisierte Haar-Wavelet-Koeffizient wird in eine entsprechende binäre Zahl bzw. Ziffernfolge aus binären Ziffern 0 und 1 jeweils mit einer festen, vorgebbaren Bitlänge, umgewandelt.

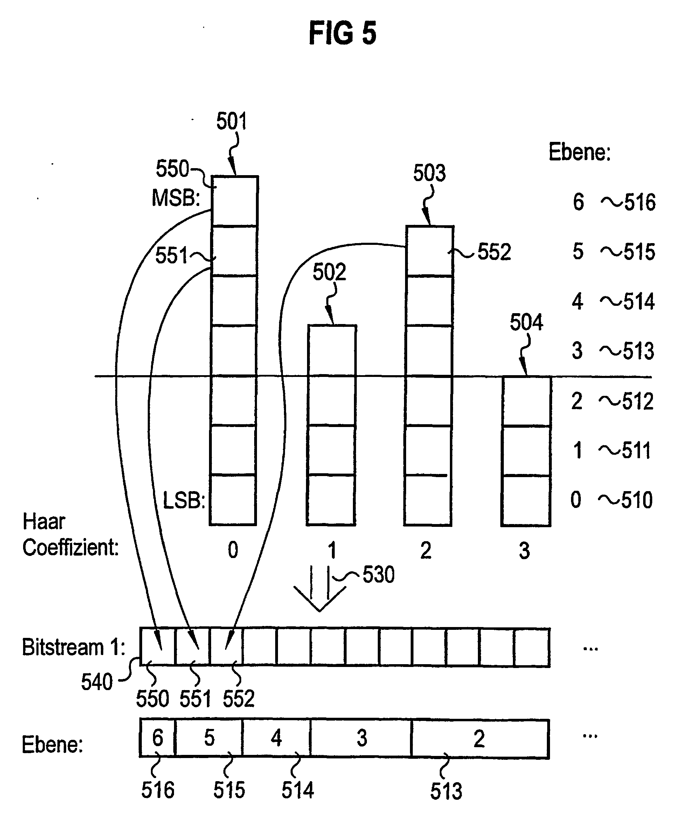

In Fig. 5 sind die binären Ziffernfolgen 501 bis 504 schematisch in einer Bitebenendarstellung dargestellt.

Eine erste Ziffernfolge 501 weist eine Bitlänge mit 7 Bit auf; eine zweite Ziffernfolge 502 weist eine Bitlänge mit 4 Bit auf; eine dritte Ziffernfolge 503 weist eine Bitlänge mit 6 Bit auf; eine vierte Ziffernfolge weist eine Bitlänge mit 3 Bit auf.

Die Anzahl der bei der Darstellung verwendeten Bitebenen richtet sich nach der maximalen Bitlänge aller Ziffernfolgen. So sind in Fig. 5 sieben Bitebenen 510 bis 516 entsprechend der Bitlänge der ersten Ziffernfolge 501 dargestellt. Die Bitebenen 510 bis 516 sind entsprechend ihrer Wertigkeit aufeinander angeordnet, d. h. die Bitebene 511 liegt auf der Bitebene 510, die Bitebene 512 liegt auf der Bitebene 511 u.s.w..

Entsprechend der jeweiligen Bitlänge werden somit von der ersten Ziffernfolge 501 alle sieben Bitebenen 510 bis 516, von der zweiten Ziffernfolge 502 die vier Bitebenen 510 bis 513, von der dritten Ziffernfolge die sechs Bitebenen 510 bis 515 und von der vierten Ziffernfolge 504 die Bitebenen 510 bis 512 besetzt.

Bei der Codierung 530 der binären Ziffernfolgen 501 bis 504 in den Bitdatenstrom 540 werden zuerst Ziffern der obersten Bitebene, in diesem Fall der siebten Bitebene 516, in den Bit-Datenstrom 540 abgelegt.

Da in diesem Fall nur die erste Ziffernfolge 501 eine Ziffer 550, welche der siebten Bitebene 516 zugehörig ist, aufweist, wird nur diese Ziffer 550 in den Bit-Datenstrom 540 abgelegt.

Anschließend werden Ziffern 551 und 552, welche der nächstniederen Bitebene, der Bitebene 515, zugehörig sind, in den Bitstrom 540 abgelegt.

In dieser Weise werden die restlichen Bitebenen 514, 513, 512, 511 und 510 jeweils mit absteigender Wertigkeit abgearbeitet. Als letzte abzuarbeitende Bitebene wird die Bitebene 510 bearbeitet.

Ziffern, welche einer gleichen Bitebene zugehörig sind, werden in der Reihenfolge der zugehörigen binären Zahlen, in diesem Fall in der Reihenfolge 501, 502, 503 und 504, in den Bit-Datenstrom 540, abgelegt.

Somit erfolgt die Codierung 530 der Ziffernfolgen 501 bis 504 in den Bit-Datenstrom vorrangig entsprechend der Wertigkeit der Bitebene, zu welcher eine zu codierende Ziffer zugehörig ist. Nur nachrangiges Ordnungsmerkmal ist in diesem Fall die Reihenfolge der binären Zahlen.

Schließlich wird der Bit-Datenstrom 540 an einen Empfänger übertragen

Im folgenden werden Alternativen des ersten Ausführungsbeispiels beschrieben.

### Erste Alternative: Umsortieren der binären Zahlen bzw. Ziffernfolgen vor dem Codieren

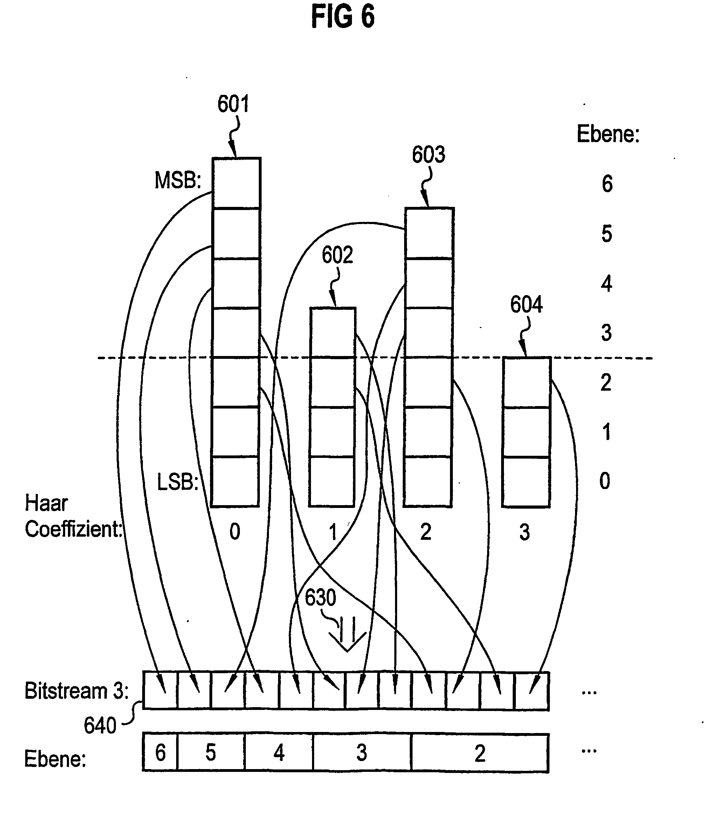

In Fig. 6 ist eine erste Alternative zu dem ersten Ausführungsbeispiel dargestellt.

In dieser ersten Alternative wird die Reihenfolge der binären Zahlen bzw. Ziffernfolgen 601 bis 604 vor der Codierung 630 in den Bitdatenstrom 640 durch Umsortieren verändert.

Die neue Reihefolge der binären Zahlen bzw. der Ziffernfolgen lautet: 601 vor 603 vor 602 vor 604.

Die neue, umsortierte Reihenfolge der binären Zahlen bzw. Ziffernfolgen 601 bis 604 berücksichtigt Frequenzen, der durch die binären Zahlen bzw. Ziffernfolgen 601 bis 604 repräsentierten Häufigkeitsänderungen in einem Histogramm bezüglich der Farbbereiche des digitalisierten Farbbildes.

Die neue erste Ziffernfolge 601 repräsentiert den Frequenzbereich mit den kleinsten Frequenzen. Der nächst höhere Frequenzbereich wird durch die neue zweite Ziffernfolge 603 repräsentiert. Die neue dritte Ziffernfolge 602 und die neue vierte Ziffernfolge 604 repräsentieren die Frequenzbereiche mit den größten Frequenzen.

Es ist anzumerken, dass die neue Reihenfolge keine Einschränkung des Umsortierens darstellt. Es können beliebige Reihenfolgen der Ziffernfolgen realisiert.

Die Codierung 630 der neu sortierten Ziffernfolgen 601 bis 604 in den Bit-Datenstrom 640 erfolgt entsprechend dem ersten Ausführungsbeispiel.

Auch in diesem Fall erfolgt die Codierung 630 der Ziffernfolgen 601 bis 604 in den Bit-Datenstrom vorrangig entsprechend der Wertigkeit der Bitebene, zu welcher eine zu codierende Ziffer zugehörig ist. Nur nachrangiges Ordnungsmerkmal ist in auch diesem Fall die neu umsortierte Reihenfolge der binären Zahlen bzw. Ziffernfolgen 601 bis 604.

### Zweite Alternative: Codierung nur ausgewählter Bitebenen

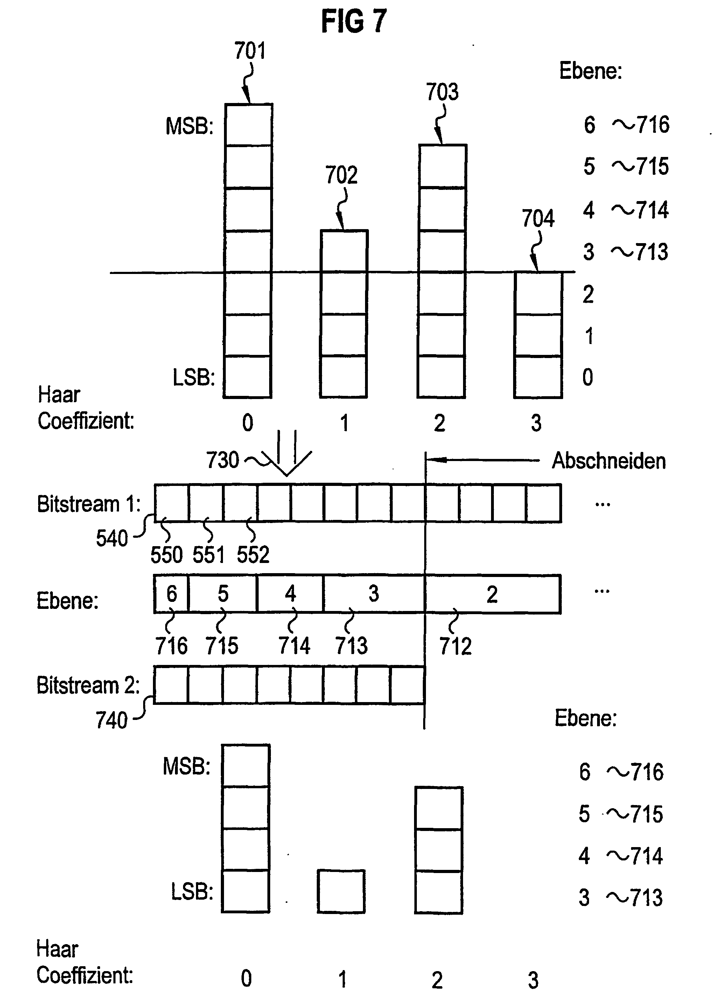

In Fig. 7 ist eine zweite Alternative zu dem ersten Ausführungsbeispiel dargestellt.

In dieser zweiten Alternative erfolgt eine Auswahl der zu codierenden Bitebenen. In dieser zweiten Alternative werden nur die Ziffern der oberen vier Bitebenen 716, 715, 714 und 713 in den Bitdatenstrom 740 codiert.

Diese Auswahl ist nicht als Einschränkung des Auswählens von zu codierenden Bitebenen zu sehen. Es ist anzumerken, dass eine beliebige Auswahl der zu codierenden Bitebenen getroffen werden kann.

Die Codierung 730 der Ziffern der ausgewählten Bitebenen 716, 715, 714 und 713 erfolgt entsprechend dem ersten Ausführungsbeispiel.

Auch in diesem Fall erfolgt die Codierung 730 der Ziffernfolgen 701 bis 704 in den Bit-Datenstrom vorrangig entsprechend der Wertigkeit der Bitebene, zu welcher eine zu codierende Ziffer zugehörig ist. Nur nachrangiges Ordnungsmerkmal ist in auch diesem Fall die Reihenfolge der binären Zahlen bzw. Ziffernfolgen 701 bis 704.

Anzumerken ist, dass zusätzlich zu einer Auswahl der zu codierenden Bitebenen noch ein Umsortieren der binären Zahlen gemäß der ersten Alternative möglich ist (Kombination erste Alternative mit der zweiten Alternative).

In diesem Dokument sind folgende Veröffentlichungen zitiert:
- [1]: Jens-Rainer Ohm, Bela Makai, Results of CE CT5 on scälable representation of color histograms, ISO/IEC JTC1/SC29/WG11 M6031, May 2000, Geneva;
- [2]: Jens-Rainer Ohm, Bela Makai, Aljoscha Smolic, Results of CE CT5 on scalable representation of color histograms, ISO/IEC JTC1/SC29/WG11 M6285, July 2000, Beijing;
- [3]: MPEG-4 applications, erhältlich am 04.10.2000 unter http://www.cselt.it/mpeg/public/mpeg-4_applications.zip;
- [4]: Jens-Rainer Ohm, Digitale Bildcodierung, Seiten 284-285, Springer Verlag, 1995, Berlin.

## Patentansprüche

1. Verfahren zur Übertragung eines Vektors mit mindestens zwei Vektorkomponenten, deren jede eine Häufigkeit beschreibt,
- bei dem jede Vektor komponente als Bit-Zahl mit einer vorgegebenen Anzahl von Bitebenen dargestellt wird und
- bei dem die Bit-Zahlen vorrangig ebenenweise entsprechend einer Wertigkeit der Bitebenen codiert und übertragen werden.

2. Verfahren nach Anspruch 1,
bei dem der Vektor ein Koeffizientenvektor ist mit Koeffizienten, welche unter Verwendung einer Transformation ermittelt wurden.

3. Verfahren nach Anspruch 2,
bei dem der Koeffizientenvektor quantisiert wird.

4. Verfahren nach einem der Ansprüche 1 bis 3,
bei dem der Vektor ein Histogramm repräsentiert.

5. Verfahren nach Anspruch 4,
bei dem das Histogramm eine Frequenzverteilung oder eine Farb- oder Helligkeitsverteilung, welche einem digitalisierten Bild zugrunde liegt, beschreibt.

6. Verfahren nach einem der Ansprüche 1 bis 5,
bei dem die Vektorkomponenten entsprechend einer vorgegebenen Reihenfolge sortiert werden.

7. Verfahren nach einem der Ansprüche 1 bis 6, bei dem nur eine vorgegebene Anzahl von Bitebenen codiert werden.

8. Verfahren nach einem der Ansprüche 1 bis 7,
bei dem die Bit-Zahlen mit einer abnehmenden Wertigkeit der Bitebenen codiert werden.

9. Anordnung zur Übertragung eines Vektors mit mindestens zwei Vektorkomponenten, deren jede eine Häufigkeit beschreibt, mit einem'Prozessor, der derart eingerichtet ist, dass folgende Schritte durchführbar sind:
- jede Vektorkomponente wird als Bit-Zahl mit einer vorgegebenen Anzahl von Bitebenen dargestellt und
- die Bit-Zahlen werden vorrangig ebenenweise entsprechend einer Wertigkeit der Bitebenen codiert und übertragen.

## Claims

1. Method for transmission of a vector with at least two vector components, of which each describes a frequency,
- in which each vector component is represented as a number of bits with a specified number of bit levels and
- in which the bit numbers are encoded and transmitted prioritized in levels according to a significance of the bit levels.

2. Method in accordance with Claim 1,
in which the vector is a coefficient vector with coefficients which were determined using a transformation.

3. Method in accordance with Claim 2,
in which the coefficient vector is quantized.

4. Method in accordance with one of the Claims 1 to 3,
in which the vector represents a histogram.

5. Method in accordance with Claim 4,
in which the histogram describes a frequency distribution or a color or brightness distribution which underlies a digitized picture.

6. Method in accordance with one of the Claims 1 to 5,
in which the vector components are sorted in accordance with a specified sequence.

7. Method in accordance with one of the Claims 1 to 6,
in which only a specified number of bit levels are encoded.

8. Method in accordance with one of the Claims 1 to 7,
in which the bit numbers are encoded with a decreasing significance of the bit levels.

9. Arrangement for transmission of a vector with at least two vector components, of which each describes a frequency, with a processor which is set up in such a way that the following steps can be executed:
- each vector component is represented as a number of bits with a specified number of bit levels and
- the numbers of bits are encoded and transmitted prioritized by levels corresponding to a significance of the bit levels.

## Revendications

1. Procédé pour transmettre un vecteur avec au moins deux composantes de vecteur, dont chacune décrit une fréquence,
- dans lequel chaque composante de vecteur est représentée sous la forme d'un nombre de bits avec un nombre prédéfini de plans de bits et
- dans lequel les nombres de bits sont codés et transmis en priorité par plans en fonction d'une valeur des plans de bits.

2. Procédé selon la revendication 1,
dans lequel le vecteur est un vecteur de coefficients avec des coefficients qui ont été calculés en utilisant une transformation.

3. Procédé selon la revendication 2,
dans lequel le vecteur de coefficients est quantifié.

4. Procédé selon l'une quelconque des revendications 1 à 3,
dans lequel le vecteur représente un histogramme.

5. Procédé selon la revendication 4,
dans lequel l'histogramme décrit une répartition de fréquence ou une répartition de couleur ou de luminosité, qui est à la base d'une image numérisée.

6. Procédé selon l'une quelconque des revendications 1 à 5,
dans lequel les composantes du vecteur sont triées en fonction d'un ordre prédéfini.

7. Procédé selon l'une quelconque des revendications 1 à 6,
dans lequel seul un nombre prédéfini de plans de bits est codé.

8. Procédé selon l'une quelconque des revendications 1 à 7,
dans lequel les nombres de bits sont codés avec une valeur décroissante des plans de bits.

9. Dispositif pour transmettre un vecteur avec au moins deux composantes de vecteur, dont chacune décrit une fréquence, avec un processeur qui est équipé de telle sorte que les étapes suivantes peuvent être réalisées :
- chaque composante de vecteur est représentée sous la forme d'un nombre de bits avec un nombre prédéfini de plans de bits et
- les nombres de bits sont codés et transmis de préférence par plans en fonction de valeurs des plans de bits.
